# EUROPEAN PATENT APPLICATION

(11) **EP 2 244 019 A2**
(43) Date of publication of application: **27.10.2010**
(21) Application number: 10382091.6
(22) Date of filing: 22.04.2010
(51) Int. Cl.: F24D 3/18, F25B 23/00

(54) **Refrigeration system for commercial establishments**

(30) Priority: 23.04.2009 ES 200930090
(71) Applicant: ORKLI, S. COOP., 20240 Ordizia (Gipuzkoa) (ES)
(72) Inventor: Aizpurua Macazaga, Amaia, 20230 Legazpi (ES); Errazkin Ugarte, Juan José, 20115 Astigarraga (ES); Aldama Odiaga, Juan Antonio, 01470 Amurrio (ES)
(74) Representative: Igartua, Ismael

(57) **Abstract**

Refrigeration system for commercial establishments, comprising at least one refrigerated enclosure (2) designed for storing refrigerated products, a refrigeration circuit (10) through which a cooling fluid (7) flows towards the refrigerated enclosure (2), and a dissipation circuit (20) that transfers the heat of the cooling fluid (7) to the inside of the commercial establishment, the use of condensers not being necessary. The dissipation circuit (20) comprises a first dissipator (21) that transfers part of the heat transferred from the cooling fluid (7) to the inside of the commercial establishment, and a second dissipator (22) that transfers the rest of the captured heat to the subfloor (11) of the commercial establishment, with the first dissipator exchanger (21) and the second dissipator exchanger (22) being arranged beneath the floor (11) of the establishment."

## Description

### TECHNICAL FIELD

The present invention relates to a refrigeration system for commercial establishments, which comprises a refrigeration circuit and an air-conditioning circuit that transfers part of the heat absorbed from the refrigeration circuit to the commercial establishment, and the rest of the heat to the floor of said commercial establishment.

### PRIOR ART

There are known refrigeration systems adapted to commercial establishments that comprise open refrigerated enclosures, adapted for storing refrigerated products, and a refrigeration circuit for each refrigerated enclosure, through which a cooling fluid flows, said refrigeration circuit comprising a evaporator built into the refrigerated enclosure, a compressor that compresses the cooling fluid evaporated beforehand in the evaporator, and a condenser that condenses the evaporated cooling fluid at high pressure, transferring heat to the exterior. In general terms, the transferred heat is evacuated to the exterior through funnels by forced air fans.

Refrigeration systems wherein the heat generated in the condenser is used to heat the commercial establishment are known from the prior art, in particular the areas where the refrigerated enclosures are located, thereby preventing the user from suffering thermal shock when entering refrigerated areas.

Document US 6,230,514 B1 thus describes a commercial refrigeration system in which the refrigeration circuit comprises a pipe through which the fluid heated in the condenser and in the compressor flows, and a fan that transfers the heat of the heated fluid to the inside of the commercial establishment.

One of the drawbacks of this type of system, aside from the noise it generates, is that it does not heat the inside of the establishment uniformly due to the air currents that are produced.

### DISCLOSURE OF THE INVENTION

The object of this invention is to provide a refrigeration system preferably for commercial establishments, as defined in the claims.

The refrigeration system comprises at least one refrigerated enclosure adapted for storing refrigerated products, a refrigeration circuit through which a cooling fluid flows towards the refrigerated enclosure, and a dissipation circuit that dissipates the heat generated in the refrigeration circuit to the inside of the commercial establishment.

The air-conditioning circuit comprises at least a first dissipator that transfers part of the heat transferred from the cooling fluid to the inside of the commercial establishment, and at least a second dissipator that transfers the rest of the heat absorbed from the cooling fluid to the subfloor of the commercial establishment, the first dissipator and the second dissipator being arranged beneath the floor of the establishment. As a result, the heat generated in the refrigeration circuit is exploited to heat the commercial establishment, thereby preventing users from suffering thermal shock when entering refrigerated areas.

The refrigeration system of the invention is energy-efficient, which results in significant financial and energy savings in comparison to other refrigeration systems in which additional energy resources are required in order to dissipate the heat generated in the refrigeration circuit and heat the inside of the commercial establishment.

In addition, the refrigeration system of the invention provides a micro-climate inside the commercial establishment, thereby offering the user greater comfort due to the fact that the heat, as it is radiated from the floor, generates a floor-level temperature that is slightly higher than the temperature at the level of the user's head, which is not the case in other systems, where the heat accumulates at the height of the ceiling, thus causing significant heat/energy loss as well as discomfort for the users.

In addition, the installation of funnels for evacuating air, which transfer the heat originating from the condenser to the exterior of the commercial establishment, is avoided. In many cases said evacuation funnels restrict the location of the commercial establishment due to the regulations in force or opposition from users affected by said system where commercial establishments are opened in residential buildings.

Finally, as condensers are not required, the refrigeration system makes less noise, with a lower level of sound insulation being required, thereby reducing the associated costs generated by the need for insulation.

These and other advantages and characteristics of the invention will be made evident in the light of the drawings and the detailed description thereof.

### DESCRIPTION OF THE DRAWINGS

Figure 1 is a schematic view of a refrigeration system according to the invention, which comprises a heat dissipation circuit arranged as a radiant floor.
Figure 2 is a sectional view of a first embodiment of the dissipation circuit shown in Figure 1.
Figure 3 is a sectional view of a second embodiment of the dissipation circuit shown in Figure 1.

### DESCRIPTION OF THE INVENTION

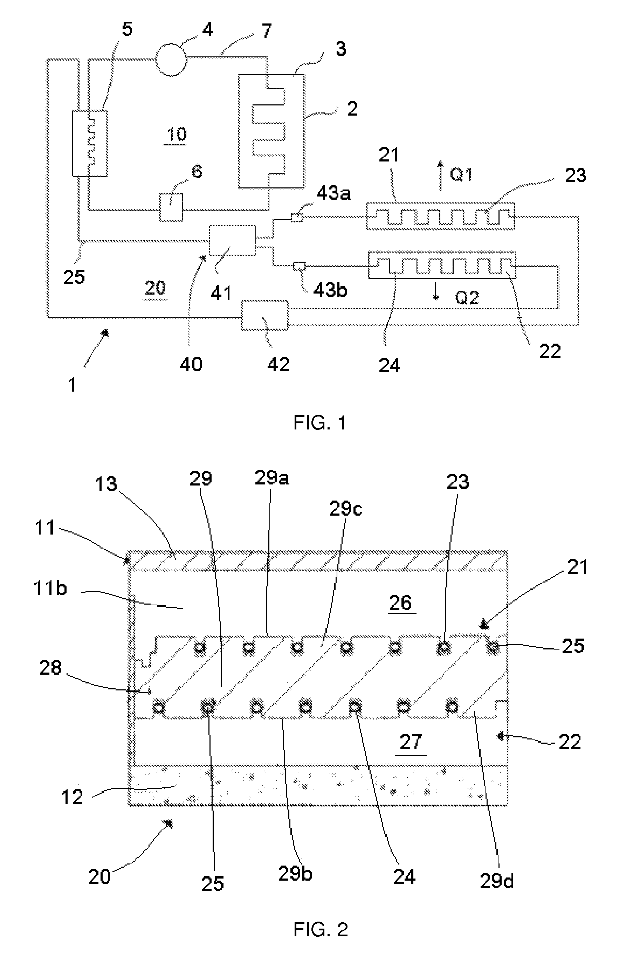

The refrigeration system 1 of the invention, shown partially in Figure 1, is adapted for commercial establishments, particularly supermarkets, and comprises at least one open refrigerated enclosure 2 in which refrigerated products are stored, a refrigeration circuit 10, connected to the refrigerated enclosure 2, through which a cooling fluid 7 flows, and a heat dissipation circuit 20 through which a heating fluid 25 heated by the heat absorbed from the cooling fluid 7 flows.

The refrigeration circuit 10 comprises an evaporator 3 arranged integrally in the refrigerated enclosure 2 and which absorbs heat from the inside of the commercial establishment when the cooling fluid 7 evaporates, while also cooling the refrigerated enclosure 2, a compressor 4 that increases the pressure of the evaporated cooling fluid 7, an exchanger 5 wherein the cooling fluid 7 transfers the heat absorbed from the inside of the establishment to the heating fluid 25, and a pressure reducer 6 wherein the cooled cooling fluid 7 loses pressure before returning to the evaporator 3.

The refrigeration circuit 10 includes other components, not shown in the figures, such as circulation pumps, safety and control valves, and pressure gauges, etc. In addition, just as the evaporator 3 may be built into the refrigerated enclosure 2, so the compressor 4, the exchanger 5 and the pressure reducer 6 may be located in other areas of the commercial establishment.

The dissipation circuit 20, shown in detail in Figures 1 to 3, comprises a first dissipator 21 that transfers part of the heat Q1 absorbed in the exchanger 5 to the inside of the commercial establishment, and a second dissipator 22 that transfers, if necessary, the rest of the heat absorbed Q2 in the exchanger 5 to the subfloor 11 b, specifically to the concrete slab 12 of the floor 11. The dissipation circuit 20 also comprises distribution means 40 that distribute the hot heating fluid 25 to the dissipators 21,22, and collect the heating fluid 25 that is returned after having been cooled, then returning it to the exchanger 5. Both dissipators 21,22 are arranged inserted into the floor 11, with the result that the second dissipator 22 is arranged supported on the concrete slab 12, which has been levelled beforehand with a levelling layer 14 of mortar, and the first dissipator 21 is arranged on the second dissipator 22, with both dissipators 21,22 remaining concealed beneath a covering 13 of the floor 11.

In other embodiments not shown in the figures, depending on the location of the commercial establishment, both dissipators 21,22 may be arranged either substantially parallel to a same height, with the result that the rest of the absorbed heat Q2 is dissipated in a fitted area of the commercial establishment, or the second dissipator 22 may be arranged on the walls of the commercial establishment, with the result that the rest of the absorbed heat Q2 is dissipated to the exterior of the commercial establishment.

In addition, although the second dissipator 22 is arranged supported on the concrete slab 12 in the embodiment shown, in other embodiments it may be arranged directly on the ground in the event that there is no concrete slab.

The dissipation circuit 20 is arranged as a radiantfloor or radial heating system, thus providing something close to the distribution of ideal temperatures, the floor-level temperature being slightly higher than the temperature at the level of the user's head, thereby giving the user a greater feeling of comfort.

The dissipation circuit 20 prevents the thermal shock to which the user is generally subjected in existing commercial establishments when moving from an average temperature ranging from approximately 20ºC to approximately 22ºC outside the area where the refrigerated enclosure 2 is located to a temperature of approximately 12ºC in the area where the refrigerated enclosure 2 is located, the floor-level temperature 11 in said area being approximately 8ºC and the temperature one metre above the floor 11 ranging from approximately 12ºC to approximately 14ºC.

The refrigeration system 1 of the invention provides a floor-level temperature 11 ranging from approximately 25ºC to approximately 26ºC, with the temperature peaking 33ºC in certain situations, and at one metre from the floor 11 the temperature ranges from approximately 16ºC to approximately 18ºC.

In addition, the first dissipator 21 and the second dissipator 22 comprise respective pipes 23,24 through which the heating fluid 25, preferably water, flows to a temperature that ranges from approximately 25ºC to 35ºC.

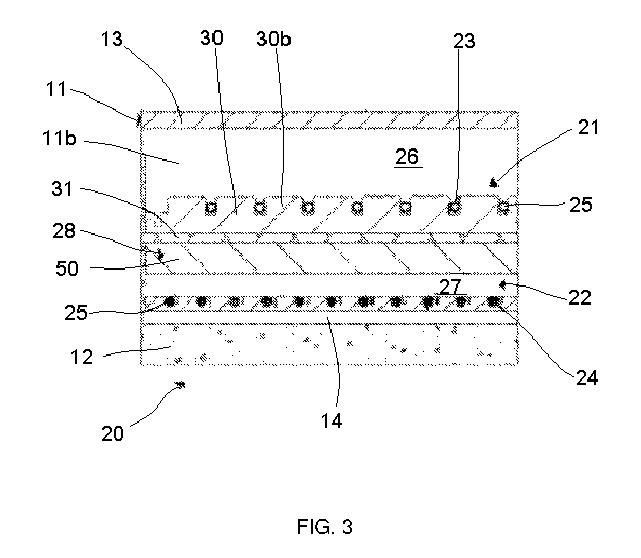

In the embodiments shown in Figures 2 and 3, the first dissipator 21 and the second dissipator 22 comprise respective conductor layers 26,27 that are deposited on the pipes 23,24, which conduct the heat of the heating fluid 25 to the inside of the commercial establishment, and to the concrete slab 12 of the commercial establishment respectively.

The conductor layers 26,27 are preferably made of mortar, to which is added an additive that improves its fluidity so that it may surround the pipes 23,24, thereby preventing the formation of air bubbles in the mortar, which hinder the transmission of heat.

In other embodiments not shown in the figures the second dissipator 22 may conduct the heat of the heating fluid 25 to an earth floor without needing a conductor layer 27.

Additionally the pipes 23,24 pasing respectively through the first dissipator 21 and the second dissipator 22 are reticulated plastic pipes, that are preferably made of high-density polyethylene, able to withstand high temperatures of up to 98ºC, being very flexible. The arrangement of the pipes 23,24 varies in accordance with the dissipation needs and the specific characteristics of the commercial establishment, and they may be arranged in the form of a coil or a spiral, etc.

In addition, the distribution means 40 comprise at least one intake collector 41 for the hot heating fluid 25, and at least one outlet collector 42 for the cooled heating fluid 25, the intake collectors 41 and the outlet collectors 42 being arranged connected to the respective pipes 23,24. Furthermore, the distribution means 40 comprise at least some respective flow regulator valves 43a, 43b, connected to the intake collector 41, which regulate the heating fluid 25 that flows through the first dissipator 21 and the second dissipator 22 respectively, at least one drainage valve and a emptying valve that allows the dissipation circuit 20 to be emptied, both the drain valve and the emptying valve not being shown in the figures.

Additionally, the dissipation circuit 20 comprises insulation means 28 that are arranged between the first dissipator 21 and the second dissipator 22, thereby preventing the heat of the first dissipator 21 from being transferred to the second dissipator 22 and/or vice versa.

In the first embodiment of the dissipation circuit 20 shown in Figure 2, the insulation means 28 comprise an insulation panel 29, on one of the surfaces 29a of which is fixed the pipe 23 of the first dissipator 21, with the pipe 24 of the second dissipator 22 being fixed on the opposite surface 29b. The insulation panel 29 comprises respective protuberances 29c, 29d that extend outwards in relation to the surface 29a and to the opposite surface 29b, and which fix and guide the corresponding pipe 23,24 to the insulation panel 29. In other embodiments not shown in the figures, the insulation panel 29 may be smooth, without the corresponding protuberances 29c, 29d, the pipes 23,24 being fixed on the surface 29a and on the opposite surface 29b by means of clips.

In the second embodiment of the dissipation circuit 20 shown in Figure 3, the insulation means 28 comprise a first insulation panel 30 on which is fixed the pipe 23 of the first dissipator 21, a second insulation panel 50 that is arranged on the second dissipator 22, and a sound insulation layer 31 that is arranged between both insulation panels 30,50. As in the first embodiment, the first insulation panel 30 comprises protuberances 30b that guide the pipe 23 of the first dissipator 21 in its path, keeping said pipe 23 fixed against the first insulation panel 30 by means of clips not shown in the figures. The second insulation panel 50 is a smooth insulation panel that is positioned on the conductor layer 27 of the second dissipator 22.

Both the insulation panel 29 of the first embodiment and the insulation panels 30,50 of the second embodiment are made of a material with a high thermal insulation capacity against heat and cold, said material preferably being expanded polystyrene, also known as EPS.

In addition, commercial establishments generally comprise several refrigerated enclosures 2, each one including the corresponding refrigeration circuit 10, with there being an increased need for heat dissipation generated in said refrigeration system. As a result, the commercial establishment is divided into dissipation areas, in each one of which are arranged the first dissipator 21 and the second dissipator 22, and through which the dissipation circuit 20 dissipates the heat gained in the exchangers 5 corresponding to each refrigeration circuit 10 to the inside of the establishment and/or to the floor. The dissipation areas are switched on or off in accordance with the dissipation needs of the refrigeration system 1.

The refrigeration system 1 also comprises control means, not shown in the figures, that control the distribution means 40 of the dissipation circuit 20. The control means comprise temperature probes for the corresponding conductor layer, arranged embedded in the subfloor 11b, which control the temperature of the conductor layers 26,27, and ambient temperature probes, arranged in the dissipation areas of the commercial establishment, which measure the ambient temperature in said dissipation areas. The control means act on the regulation means 40 so that, in accordance with the dissipation needs of the refrigeration system 1, the ambient temperature measured in each dissipation area, and the maximum and minimum admissible ambient temperatures preset in each dissipation area, the various dissipation areas are switched on and off.

In winter, therefore, in view of the fact that there is a greater need to heat the inside of the commercial establishment, the first dissipators 21 dissipate more heat to the inside of the commercial establishment than the second dissipators 22 do to the subfloor 11 b. In general terms, starting from a first dissipation area in which the refrigerated enclosure 2 is arranged, when in said first dissipation area the corresponding ambient temperature probe detects that the maximum temperature has been reached, the control means switch on the first dissipator 21 corresponding to a second dissipation area, close to the first dissipation area. When the maximum temperature is reached in said second dissipation area, the first dissipator 21 corresponding to a third dissipation area is switched on, and so on. If, at any point, the ambient temperature detected in a certain dissipation area is lower than the minimum temperature preset in said dissipation area, the first dissipator 21 corresponding to said dissipation area is switched on.

In addition, if the dissipation to the inside of the commercial establishment is not sufficient to dissipate all the heat generated in the refrigerated enclosures 2 of the refrigeration system 1, the second dissipators 22 of each dissipation area are switched on one by one. As a result, starting from the first dissipation area, when the temperature probe for the conductor layer 27 connected to the second dissipator 22 detects a maximum temperature set for said conductor layer 27, the second dissipator 22 of the next dissipation area switches on, with the process continuing until the dissipation needs of the refrigeration system 1 have been met.

In summer, however, there is less of a need to heat the inside of the commercial establishment, and as a result the second dissipator 22 dissipates more heat to the subfloor 11 b than the first dissipator 21 to the inside of the commercial establishment. As a result, in the first dissipation area, corresponding to the refrigeration area, the first dissipator 21 dissipates heat to the inside of the commercial establishment with the purpose of easing the low temperatures found in said refrigeration area. In addition, the control means switch on the second dissipators 22 of the dissipation areas one by one, dissipating most of the heat generated in the refrigeration circuit 10 to the subfloor 11 b. As a result, when the temperature probe for the conductor layer temperature probe for the conductor layer 27 detects that the maximum temperature in said conductor layer 27 has been reached, the control means switch on the second dissipator 22 of the next dissipation area, and so on, until the dissipation needs of the system 1 have been met.

In contrast, when the temperature measured by the temperature probe for the conductor layer 27 in a certain dissipation area falls to the minimum temperature preset for said conductor layer 27, the control means send a signal to the regulation means 40 so that they may switch said dissipation area off, cutting off the supply of heating fluid 25 to the second dissipator 22 of said dissipation area.

## Claims

1. Refrigeration system adapted for commercial establishments, comprising at least one refrigerated enclosure (2) adapted for storing refrigerated products, a refrigeration circuit (10) through which a cooling fluid (7) flows towards the refrigerated enclosure (2), and a dissipation circuit (20) for dissipating the heat generated in the refrigeration circuit (10) to the inside of the commercial establishment, **characterised in that** the dissipation circuit (20) comprises at least a first dissipator (21) that transfers part of the heat (Q1) transferred from the cooling fluid (7) to the inside of the commercial establishment, and at least a second dissipator (22) that transfers the rest of the heat (Q2) absorbed from the cooling fluid (7) to the subfloor (11 b) of the commercial establishment, the first dissipator (21) and the second dissipator (22) being arranged beneath the floor (11) of the commercial establishment.

2. Refrigeration system according to the preceding claim, wherein the second dissipator (22) starts operating when the first dissipator (21) is unable to dissipate all the heat generated in the refrigeration circuit (10).

3. Refrigeration system according to any of the preceding claims, wherein each dissipator (21, 22) respectively comprises a pipe (23,24) through which a heating fluid (25) that collects the heat of the cooling fluid (7) flows, and a conductor layer (26,27) that conducts the heat of the heating fluid (25).

4. Refrigeration system according to claim 3, wherein the heating fluid (25) is water.

5. Refrigeration system according to any of claims 3 or 4, wherein each conductor (26,27) is made of mortar.

6. Refrigeration system according to any of the preceding claims, wherein the dissipation circuit (20) comprises regulation means (40) that regulate the flow of heating fluid (25) flowing through each dissipator (21,22).

7. Refrigeration system according to claim 6, wherein the regulation means (40) comprise a flow regulator valve (43a,43b) connected to the corresponding dissipator (21,22).

8. Refrigeration system according to any of the preceding claims, wherein the amount of heat dissipated (Q1) by the first dissipator (21) is greater than the amount of heat dissipated (Q2) by the second dissipator (22) when the ambient temperature of the inside of the commercial establishment is lower than a minimum preset ambient temperature.

9. Refrigeration system according to any of the preceding claims, wherein the amount of heat dissipated (Q1) by the first dissipator (21) is smaller than the amount of heat dissipated (Q2) by the second dissipator (22) when the ambient temperature of the inside of the commercial establishment is greater than a maximum preset ambient temperature.

10. Refrigeration system according to any of the preceding claims, wherein the second dissipator (22) is arranged beneath the first dissipator (21).

11. Refrigeration system according to any of claims 1 to 9, wherein the first dissipator (21) and the second dissipator (22) are arranged substantially parallel to a same height.

12. Refrigeration system according to any of the preceding claims, wherein the air-conditioning circuit (20) comprises insulation means (28) that are arranged between the first dissipator (21) and the second dissipator (22).

13. Refrigeration system according to claim 12, wherein the insulation means (28) comprise a first insulation panel (30) on which the first dissipator (21) is arranged, and a second insulation panel (50) that is arranged on the second dissipator (22).

14. Refrigeration system according to claim 12, wherein the insulation means (28) comprise an insulation panel (29) on one of the faces (29a) of which is arranged the first dissipator (21) and on the opposite face (29b) of which is arranged the second dissipator (22).

15. Refrigeration system according to either of claims 13 or 14, wherein each insulation panel (29,30,50) comprises protuberances (29c,29d,30b,50b) that guide the corresponding dissipator (21,22).

16. Refrigeration system according to any of claims 13 to 15, wherein at least one insulation panel (29,30,50) is a smooth panel.
